Europäisches Patentamt

European Patent Office

Office européen des brevets

(11) Veröffentlichungsnummer: **0 187 647**

A2

# EUROPÄISCHE PATENTANMELDUNG

(21) Anmeldenummer: 86100074.3

(22) Anmeldetag: 04.01.86

(51) Int. Cl.⁴: **B 23 B 29/034**
**B 23 B 51/04**

(30) Priorität: 10.01.85 DE 3500602

(43) Veröffentlichungstag der Anmeldung:
16.07.86 Patentblatt 86/29

(84) Benannte Vertragsstaaten:
AT BE CH FR GB IT LI LU NL SE

(71) Anmelder: **Mönkediek, Bernhard**
**Wesereschstrasse 94**
**D-4500 Osnabrück(DE)**

(72) Erfinder: **Mönkediek, Bernhard**
**Wesereschstrasse 94**
**D-4500 Osnabrück(DE)**

(74) Vertreter: **Bruse, Willy Hans Heinrich**
**Edisonstrasse 14**
**D-2800 Bremen 33(DE)**

(54) Bohrwerkzeug.

(57) Es wird ein Bohrwerkzeug einstückiger Ausbildung mit Kühlmittelzuführung über eine zentrale Bohrung durch das Werkzeug beschrieben, welches zwischen dem Bohrschaft (2) und dem Aufnahmeschaft (1) zwei seitliche, sich diamentral gegenüberliegende Einschnitte (8, 9) aufweist, die in einer gemeinsamen Ebene, welche mit einer durch die Schneidkanten (6) der Schneidflächen gelegten Ebene einen Winkel von 90 Grad einschließt, senkrecht zur Mittellängsachse (7) des Bohrwerkzeuges angeordnet sind, und welches im Bereich dieser Einschnitte (8, 9) eine die Wangen der Einschnitte gegeneinander abstützende Einstellvorrichtung (10) aufweist.

Figur 1

## Bohrwerkzeug

Die Erfindung betrifft ein Bohrwerkzeug der Gattung nach dem Oberbegriff des Patentanspruches 1.

Bekannt sind vorwiegend einstückig ausgebildete Bohrwerkzeuge, bei denen sich zwischen dem Bohrschaft und dem Aufnahmeschaft ein Bundteil befindet, der dem Werkzeug eine besondere Steifigkeit verleiht und auch als Führungsmittel Verwendung findet. Die Kühlmittelzufuhr erfolgt über eine zentrale, in Längsrichtung durchlaufende Bohrung, so daß das Kühlmittel von der Stirnseite am freien Ende des Aufnahmeschafts her mit einem ausreichend hohen Druck von innen bis an die Schneidkanten der aus einem hochfesten Werkstoff hergestellten Schneidflächen gelangen kann, um die Bohrspäne über längs-verlaufend ausgebildete Spankammern im Bohrschaft abzuführen. Die Schneidflächen aus Hartmetall oder einem anderen geeigneten Werkstoff sind am freien Ende des Bohrschafts versetzt zueinander angeordnet, so daß ihre Schneidkanten zwar in einer gemeinsamen Ebene liegen, jedoch eine Zentrierung und Vorbohrung entbehrlich machen, um in einem Arbeitsgang die Herstellung einer Bohrung zu ermöglichen. Die Schneidflächen sind an Wendeplatten ausgebildet und auswechselbar befestigt. Es sind jedoch auch fest eingebaute Platten mit Schneidflächen bekannt.

Es ist Aufgabe der Erfindung, ein solches Bohrwerkzeug in der Weise auszubilden, daß trotz fehlender Zentrierung und Vorbohrung Bohrungen von hoher Maßgenauigkeit mit kleinsten Toleranzen durch Einstellung des Bohrwerkzeugs hergestellt werden können.

Zur Lösung dieser Aufgabe ist erfindungsgemäß ein Bohrwerkzeug vorgesehen, welches Ausbildungsmerkmale nach dem Kennzeichen des Patentanspruches 1 aufweist.

Diese Ausbildungsmerkmale ermöglichen eine Feinsteinstellung der Schneidkanten des Bohrwerkzeuges gegenüber dem Werkstück, so daß auch kleinste Toleranzen im Bereich weniger hundertstel Millimeter möglich sind. Diese Einstellung erfolgt durch Verformung des Bohrwerkzeuges in seiner Längsachse und Feststellung der eingestellten Verformung. Dabei ist zu berücksichtigen, daß die grobe Einstellung des Werkzeuges in der herkömmlichen Weise erfolgt, so daß lediglich eine Feinstjustierung mit den Mitteln gemäß der Erfindung vorgenommen werden soll. Für die konstruktive Ausbildung der Erfindungsmerkmale ist nach einem besonderen Erfindungsgedanken ein Bohrwerkzeug einstückiger Ausbildung vorgesehen, welches zwischen dem Bohrschaft und dem Aufnahmeschaft zwei seitliche, sich diametral gegenüberliegende Einschnitte (Schlitze) aufweist, die in einer gemeinsamen Ebene, welche mit einer durch die Schneidkanten der Schneidflächen gelegten Ebene einen Winkel von 90 Grad einschließt, senkrecht zur Mitte-Längs-Ebene des Bohrwerkzeuges angeordnet sind, wobei im Bereich dieser Einschnitte eine die Wangen der Einschnitte gegeneinander abstützende Einstellvorrichtung vorgesehen ist. Meistens weisen solche einstückigen Bohrwerkzeuge einen Bundteil zwischen dem Bohrschaft und dem Aufnahmeschaft auf. Es ist vorteilhaft, die seitlichen Einschnitte und die Verstelleinrichtung im Bundteil anzuordnen. Es ist von besonderem Vorteil, daß die Kühlmittelzufuhr durch das Zentrum des Bohrwerkzeuges beibehalten werden kann, wie es an sich bekannt ist. Es ist außerdem von Vorteil, daß die Baulänge des Bohrwerkzeugs gegenüber herkömmlichen Ausführungen nicht vergrößert werden muß.

Bei einer bevorzugten Ausführungsform ist vorgesehen, daß die die Verformung des Bohrwerkzeuges um seine Längsachse bewirkende Verstelleinrichtung im Bereich eines der beiden Einschnitte angeordnet ist und daß im Bereich des anderen Einschnittes eine verstellbare Stütze vorgesehen ist, die sich gegen die beiden Wangen des Einschnittes abstützt. Bei gelöster Stütze kann eine Feinsteinstellung des Bohrwerkzeuges durch die Verstelleinrichtung bewirkt werden, wobei der eingestellte Zustand durch die Stütze zusätzlich fixiert und versteift wird.

Für die Verstelleinrichtung sind Keilflächen mit einem selbsthemmenden Neigungswinkel an einem mittels Werkzeug verstellbaren Stellkörper besonders geeignet, weil eine solche Ausbildung zusätzliche Feststellmittel für den Stellkörper im eingestellten Zustand nicht erfordert. Bevorzugt wird ein Verstellkörper aus einem verdrehbaren Exzenter, dessen konzentrische Lager in der einen Wange des einen Einschnittes im Bundteil angeordnet sind und dessen exzentrische Keilfläche gegen ein Druckstück preßbar ist, welches sich andererseits gegen die andere der beiden Wangen des Einschnittes abstützt. Geeignet sind jedoch auch Verstelleinrichtungen aus zwei in dem einen Einschnitt gegeneinander verstellbaren Keilkörpern. Bevorzugt wird eine Ausbildung, bei der die beiden Keilkörper mit einem Muttergewinde auf Bolzengewinden unterschiedlicher Steigung einer gemeinsamen Spindel angeordnet sind, die von außen mittels eines Werkzeuges verdrehbar ist. Durch die beiden Gewinde mit unterschiedlicher Steigung erfolgt bei Spindeldrehung eine Relativbewegung der beiden Keilkörper zueinander.

Zur Erläuterung der Erfindung und ihrer besonderen Einzelheiten sind auf der Zeichnung Ausführungsbeispiele dargestellt, die nachfolgend erläutert werden. Auf der Zeichnung zeigen:

Figur 1   eine Seitenansicht eines Bohrwerkzeuges mit den erfindungsgemäßen Ausbildungsmerkmalen,

Figur 2   einen Schnitt nach der Linie II-II der Figur 1,

Figur 3   eine im Maßstab vergrößerte Ausschnittdarstellung gemäß A der Figur 2,

Figur 4   im vergrößerten Maßstab eine Ausschnittdarstellung entsprechend Figur 3 eines anderen Ausführungsbeispieles,

Figur 5   im vergrößerten Maßstab eine Ausschnittdarstellung entsprechend Figur 3 eines weiteren Ausführungsbeispieles,

Figur 6    im vergrößerten Maßstab eine Ausschnittdarstellung entsprechend Figur 3 eines
           weiteren Ausführungsbeispieles,

Figur 7    eine Seitenansicht des Ausführungsbeispieles nach Figur 6,

Figur 8    im vergrößerten Maßstab ein Ausführungs-
           beispiel einer Verstelleinrichtung mit
           einem Konus und

Figur 9    eine Teilansicht nach der Linie IX-IX
           der Figur 8.

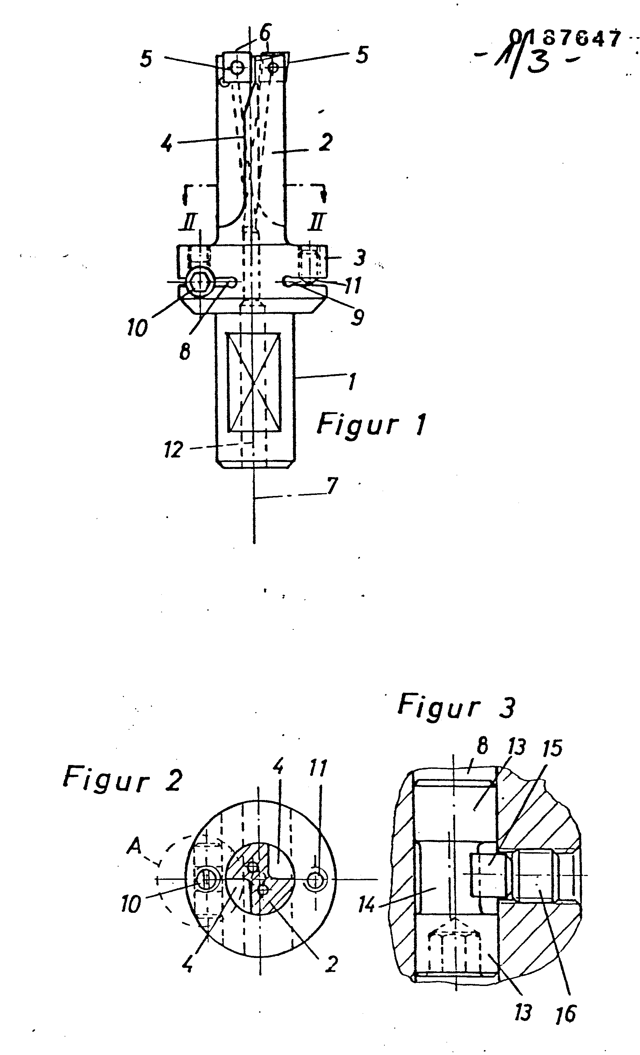

Das Ausführungsbeispiel entsprechend Figur 1 zeigt ein
Bohrwerkzeug in Stangenbauart und einstückiger Ausbildung,
welches sich aus dem Aufnahmeschaft 1 zur Befestigung des
Bohrwerkzeuges in einem Werkzeughalter aus dem Bohrschaft 2
und dem zwischen diesen beiden angeordneten Bundteil 3
zusammensetzt. Der Bohrschaft 2 weist längsverlaufend angeordnete Spankammern 4 und an seinem freien Ende auswechselbare Wendeplatten 5 auf, die zwar versetzt zueinander angeordnet sind, deren Schneidkanten 6 jedoch in einer gemeinsamen Ebene quer zur Längsachse 7 des Bohrwerkzeuges
angeordnet sind.

Im Bereich des Bundteiles 3 weist das Bohrwerkzeug zwei
sich diametral in einer Ebene quer zur Längsachse 7 und
senkrecht zu der Ebene durch die Schneidkanten 6 der
Platten 5 liegende Einschnitte 8 und 9 auf, die jedoch
diametral einen Abstand voneinander aufweisen, der in
jedem Falle größer ist, als die schwächste Stelle des
Bohrschaftes, bedingt durch die Anordnung der Spankammern 3.
Die inneren Enden der Einschnitte 8 und 9 gehen in ovale,
runde oder vergleichbar geformte Ausnehmungen über. Innerhalb des einen Einschnittes 8 ist die Verstelleinrichtung 10 angeordnet, durch die die beiden Wangen des Einschnittes 8 gegenüber der Mittelebene auseinandergedrückt werden können, so daß sich die beiden Wangen des anderen Einschnittes 9 einander nähern. Durch diese Biegekräfte erfolgt eine Knickung der Achse 7 des Bohrwerkzeuges in ihrem Schnittpunkt mit der gemeinsamen Mittelebene der beiden Einschnitte 8 und 9. In der sich aus der Zeichnung in Figur 1 ergebenden Hebelübersetzung erfolgt durch diese Biegekräfte eine Verstellung der Schneiden 6 der Platten 5 in Richtung ihrer gemeinsamen Ebene. Äußerst geringe Materialverformungen durch die Verstelleinrichtung 10 ermöglichen die beabsichtigte Feinsteinstellung der Schneidkanten 6 der Platten 5. Die durch die Verstelleinrichtung eingestellte Lage kann durch eine in den gegenüberliegenden Schlitz 9 wirksame Stütze 11 zusätzlich versteift werden. Durch die besondere Lage der Einschnitte und der Verstelleinrichtung zur Ebene der Schneidkanten 6 der Platten 5 erfolgt eine Verstellung der Schneidkanten 6 lediglich in der Plattenebene, so daß die Werkzeugfunktion durch die Feinsteinstellvorrichtung nicht beeinflußt wird. Die Kühlmittelzufuhr erfolgt in bekannter Weise über eine zentrale Bohrung 12 von innen an die Schneidkanten 6 der Platten 5.

Nach dem Ausführungsbeispiel der Figur 3 besteht die Verstelleinrichtung aus einem in einer Querebene der Achse 7 des Bohrwerkzeugs zwischen den Wangen des einen Einschnittes 8 mit seinen konzentrischen Enden 13 drehbar gelagerten Exzenter 14, dessen Keilfläche gegen ein Druckstück 15 preßbar ist, welches sich gegen eine Vorspannschraube 16 abstützt. Durch Verdrehung des Exzenters 14 mittels eines nicht dargestellten Werkzeuges können die Wangen des Einschnittes 8 auseinandergedrückt werden, so daß eine Verformung des Bohrwerkzeuges mit seiner Längsachse 7 gegenüber der gemeinsamen Mittelebene beider Einschnitte 8 und 9 erfolgt.

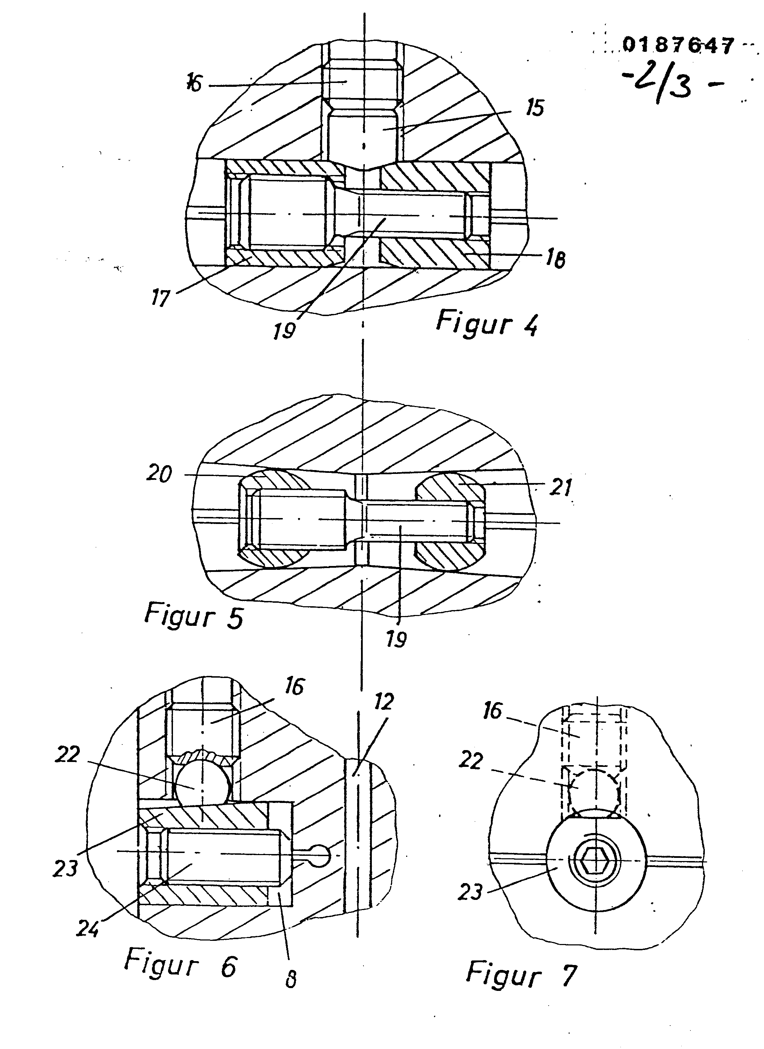

In Abänderung des Ausführungsbeispieles nach Figur 3 sind bei dem Ausführungsbeispiel entsprechend Figur 4 zwei keilförmig ausgebildete Druckstücke 17 und 18 mit einem Muttergewinde unterschiedlicher Steigung auf einer gemeinsamen Spindel 19 verschraubbar, so daß bei Spindeldrehung eine Relativbewegung der beiden Druckstücke 17 und 18 zueinander erfolgt. Deren Keilflächen wirken wieder gegen ein Druckstück 15, wie es zu Figur 3 beschrieben wurde und welches sich gegen eine Vorspannschraube 16 abstützt. Eine ähnliche Ausbildung ist in der Figur 5 dargestellt, bei der kugelförmige Druckstücke 20 und 21 ebenfalls mit einem Muttergewinde unterschiedlicher Steigung auf einer gemeinsamen Spindel 19 angeordnet sind, um den zu Figur 4 beschriebenen Effekt zu erreichen. Bei dieser Anordnung kann das Druckstück 15 mit der Vorspannschraube 16 entfallen. Eine andere Lösung ist in der Figur 6 dargestellt. Danach ist in dem einen Einschnitt 8 eine Verstelleinrichtung aus zwei gegeneinander verschiebbaren Keilstücken 22 und 23 vorgesehen, wobei die Verschiebung durch eine von außen mittels eines Werkzeuges verdrehbare Spindel 24 erfolgt, die sich gegen eine Bodenfläche des Einschnittes 8 abstützt. Auch bei dieser Ausbildung kann das eine Keilstück 22 durch eine Vorspannschraube 16 belastet sein. Gezeigt wird durch diese Auswahl von Beispielen, daß die Verstelleinrichtung in beliebiger Weise aufgebaut sein kann, wenn sie eine Verformung der Längsachse 7 um deren Schnittpunkt mit der gemeinsamen Ebene durch die Mitte der beiden Einschnitte 8 und 9 bewirkt.

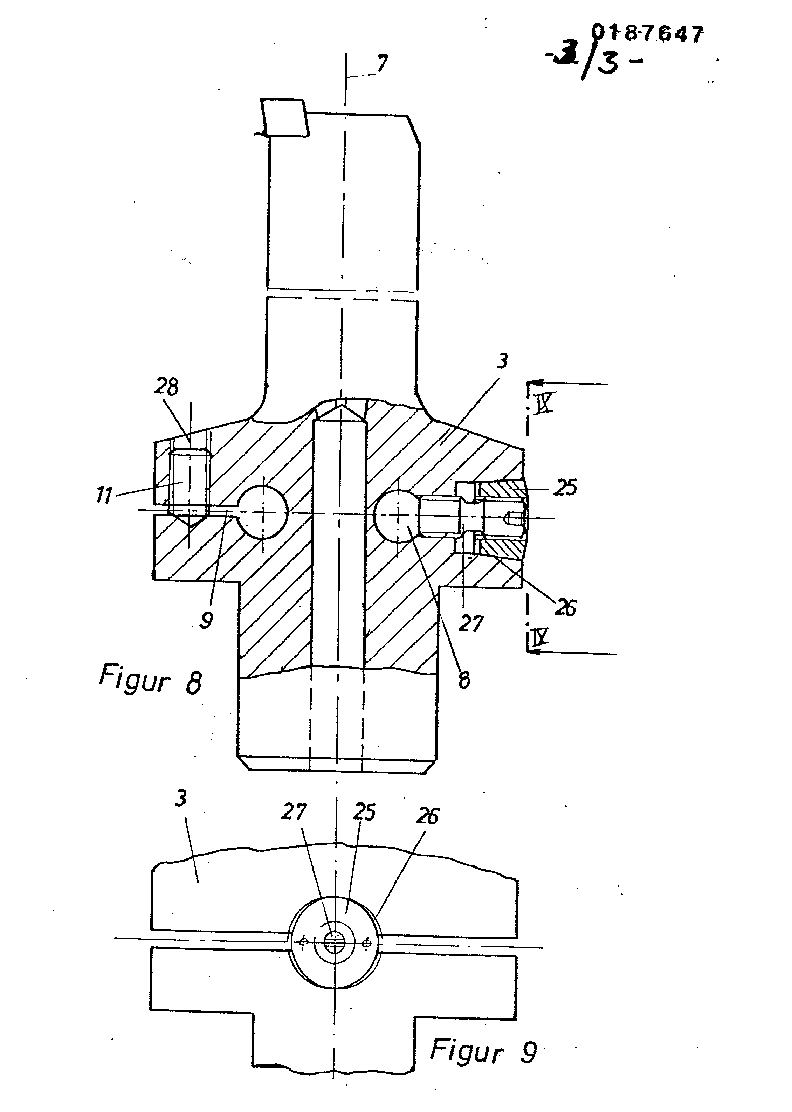

In den Figuren 8 und 9 ist ein bevorzugtes Ausführungsbeispiel einer Verstelleinrichtung mit einem Konus 25 dargestellt, der in einem Innenkonus 26 im Bereich des Einschnittes 8 im Bund 3 des Bohrwerkzeugkörpers quer zu dessen Längsachse verstellbar ist. Die Verstellung erfolgt z.B. durch einen Gewindebolzen 27 mit zwei Gewindeteilen, die mit unterschiedlicher Steigung und gegebenenfalls auch gegenläufig ausgebildet sein können, um mit geringem Aufwand große Stellkräfte auszuüben. Nach einem besonders vorteilhaften Gestaltungsgedanken der Erfindung ist der Innenkonus 26 in Umfangsrichtung des Bohrwerkzeugkörpers zylindrisch aufgefräst, wie es unmaßstäblich übertrieben in der Figur 9 dargestellt ist. Die Aufweitung des Innenkonus 26 erfolgt nur geringfügig in einer Größenordnung weniger hundertstel bis höchstens zehntel Millimeter. Erreicht wird dadurch die Konzentration der Stellkräfte in Richtung der Längsachse 7 und andererseits eine bessere Übertragung der Torsionskräfte durch die Verstelleinrichtung, weil im Bereich der Auffräsung eine gleichmäßige Flächenpressung zwischen Konus 25 und Innenkonus 26 erzielt wird, wenn das Bohrwerkzeug benutzt wird.

Die Stützeinrichtung zur Fixierung des durch die Verstelleinrichtung 10 erreichten Feinsteinstellung der Schneidkanten 6 der Platten 5 besteht bei dem Ausführungsbeispiel aus einer Stellschraube 11, die von außen mittels eines Werkzeuges gelöst und festgezogen werden kann. Bei dem Beispiel der Figur 8 greift diese Stellschraube 11 in das Gewinde der Bohrung 28 ein.

Bohrwerkzeug

Patentansprüche :

1. Bohrwerkzeug mit Kühlmittelzuführung über eine zentrale Bohrung durch das Werkzeug, welches einen Bohrschaft mit an seinem freien Ende angeordneten Schneidflächen aus hochfestem Werkstoff und einen Aufnahmeschaft zum Spannen des Werkzeugs aufweist, dadurch gekennzeichnet, daß die Mittellängsachse (7) des Bohrschaftes (2) und die Mittellängsachse (7) des Aufnahmeschaftes (1) durch elastische Materialverformung des Bohrwerkzeuges in der Ebene der Schneidkanten (6) winkelverstellbar und in der Winkellage zueinander einstellbar sind.

2. Bohrwerkzeug einstückiger Ausbildung nach Anspruch 1, dadurch gekennzeichnet, daß es zwischen dem Bohrschaft (2) und dem Aufnahmeschaft (1) zwei seitliche, sich diametral gegenüberliegende Einschnitte (8,9) (Schlitze) aufweist, die in einer gemeinsamen Ebene, welche mit einer durch die Schneidkanten (6) der Schneidflächen gelegten Ebene einen Winkel von 90 Grad einschließt, senkrecht zur Mittellängsachse (7) des Bohrwerkzeuges angeordnet sind, und daß im Bereich dieser Einschnitte (8,9) eine die Wangen der Einschnitte gegeneinander abstützende Einstellvorrichtung (10) vorgesehen ist.

3. Bohrwerkzeug nach den Ansprüchen 1 und 2, dadurch gekennzeichnet, daß die Verstelleinrichtung (10) im Bereich des einen Einschnittes (8) angeordnet ist, und daß im Bereich des anderen Einschnittes (9) eine verstellbare Stütze (11) vorgesehen ist, die sich gegen die beiden Wangen des Einschnittes (9) abstützt.

4. Bohrwerkzeug nach den Ansprüchen 1 bis 3 mit einem Bundteil zwischen dem Bohrschaft und dem Aufnahmeschaft, dadurch gekennzeichnet, daß die Einschnitte (8,9) und die Verstelleinrichtung (10) im Bundteil (3) angeordnet sind.

5. Bohrwerkzeug nach den Ansprüchen 1 bis 4, dadurch gekennzeichnet, daß der diametrale Abstand der Einschnitte (8,9) voneinander größer ist, als die Materialstärke an der schwächsten Stelle des Bohrschaftes (2) mit seinen längsverlaufend angeordneten Spankammern (4).

6. Bohrwerkzeug nach den Ansprüchen 1 bis 5, dadurch gekennzeichnet, daß die Verstelleinrichtung (10) Keilflächen mit einem selbsthemmenden Neigungswinkel an einem mittels Werkzeug verstellbaren Stellkörper (13, 14,17,18,20,21,22,23) aufweist.

7. Bohrwerkzeug nach den Ansprüchen 1 bis 6, dadurch gekennzeichnet, daß der Verstellkörper aus einem verdrehbaren Exzenter (14) besteht, dessen konzentrische Lagerkörper (13) im Bereich eines Einschnittes (8) in dem Bundteil (3) gelagert sind und dessen exzentrische Keilfläche gegen ein Druckstück (15) preßbar ist, welches sich andererseits gegen eine der beiden Wangen des Einschnitts (8) abstützt.

8. Bohrwerkzeug nach den Ansprüchen 1 bis 6, dadurch gekennzeichnet, daß die Verstelleinrichtung (10) aus zwei in dem Einschnitt (8) gegeneinander verstellbaren Keilkörpern (17,18) besteht.

9. Bohrwerkzeug nach Anspruch 8, dadurch gekennzeichnet, daß die beiden Keilkörper (17,18 bzw. 20,21) mit einem Muttergewinde auf Bolzengewinden unterschiedlicher Steigung einer gemeinsamen Spindel (19) angeordnet sind.

10. Bohrwerkzeug nach den Ansprüchen 1 bis 6, gekennzeichnet durch eine Verstelleinrichtung (10) mit einem Konus (25), der in einem Innenkonus (26) des Bohrwerkzeugkörpers quer zu dessen Längsachse (7) verstellbar ist.

11. Bohrwerkzeug nach Anspruch 10, dadurch gekennzeichnet, daß der Innenkonus (26) in Umfangsrichtung des Bohrwerkzeugkörpers zylindrisch aufgefräst ist.

12. Bohrwerkzeug nach Anspruch 3, dadurch gekennzeichnet, daß die verstellbare Stütze (11) aus einer in einem Gewinde in der einen Wange des Einschnittes (9) verstellbaren Schraube besteht, deren eines Stirnende gegen die andere Wange drückt.

**Figur 1**

**Figur 2**

**Figur 3**

Figur 4

Figur 5

Figur 6

Figur 7

0187647

**Figur 8**

**Figur 9**